# EUROPÄISCHE PATENTSCHRIFT

(11) **EP 2 764 237 B1**
(45) Veröffentlichungstag und Bekanntmachung des Hinweises auf die Patenterteilung: **25.07.2018**
(21) Anmeldenummer: 12778261.3
(22) Anmeldetag: 05.10.2012
(51) Int. Cl.: F03D 1/00, B66C 1/10

(54) **VERFAHREN UND VORRICHTUNG ZUM MONTIEREN EINES ROTORS EINER WINDENERGIEANLAGE**
METHOD AND DEVICE FOR MOUNTING A ROTOR OF A WIND ENERGY PLANT
PROCÉDÉ ET DISPOSITIF DE MONTAGE D'UN ROTOR D'UNE ÉOLIENNE

(30) Priorität: 07.10.2011 DE 102011084140
(43) Veröffentlichungstag der Anmeldung: 13.08.2014
(60) Teilanmeldung: 17153315.1
(73) Patentinhaber: Wobben Properties GmbH, 26607 Aurich (DE)
(72) Erfinder: MEYER, Wolfgang, 26639 Wiesmoor (DE); KUIPER, Gerrit, 26607 Aurich (DE); KNOOP, Frank, 26607 Aurich (DE)
(74) Vertreter: Eisenführ Speiser
(86) Internationale Anmeldenummer: PCT/EP2012/069785
(87) Internationale Veröffentlichungsnummer: WO 2013/050569

(56) Entgegenhaltungen:
- EP-A1- 2 003 333
- DE-A1-102009 005 632
- DE-U1- 20 109 835
- DE-U1-202010 003 033

## Beschreibung

Die vorliegende Erfindung betrifft eine Hebetraverse zum Heben und Handhaben eines Rotorblatts sowie eine Handhabungsanordnung mit Hebetraverse und Rotorblatt zum Handhaben eines Rotorblattes. Die Erfindung betrifft auch eine Transportvorrichtung zum Transportieren einer Hebetraverse, ein Verfahren zum Montieren von Rotorblättern, ein Verfahren zum Montieren eines Rotors, ein Verfahren zum Demontieren von Rotorblättern sowie ein Verfahren zum Tauschen von Rotorblättern.

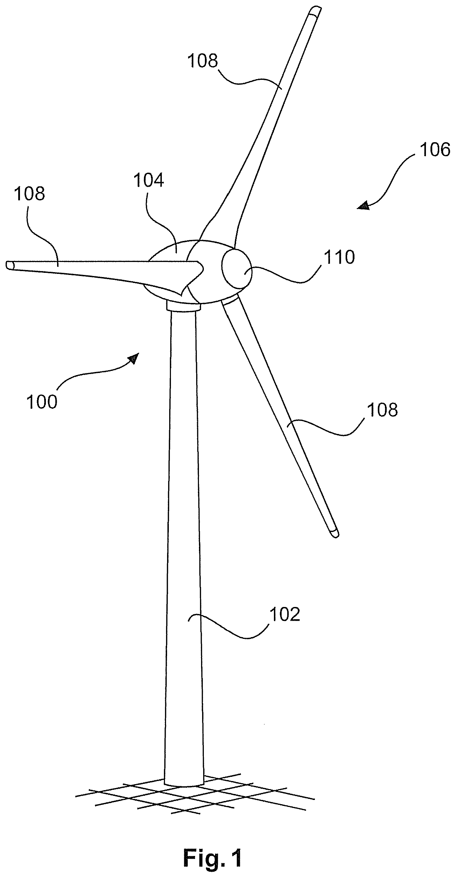

Windenergieanlagen sind hinlänglich bekannt und ein gängiger Typ ist eine so genannte Horizontalachsen-Windenergieanlage, wie sie auch in der Fig. 1 dargestellt ist. Unter einer Horizontalachsen-Windenergieanlage bzw. einer Windenergieanlage mit einem Horizontalachsenrotor versteht man eine Anordnung mit horizontaler Rotorachse in Abgrenzung zu einem Typ mit vertikaler Rotorachse. Auf eine exakt waagrechte Ausrichtung der Rotorachse kommt es nicht an, sondern es soll nur der grundsätzliche Anlagentyp bezeichnet werden. Übliche Horizontalachsen-Windenergieanlage weisen heutzutage drei Rotorblätter auf, worauf sich die nachfolgende Erfindung konzentriert, ohne darauf beschränkt zu sein. Insoweit spätere Ausführungen nur im Zusammenhang mit einem Horizontalachsenrotor mit drei Rotorblättern Sinn ergeben, ist entsprechend von einem Rotor mit drei Rotorblättern auszugehen.

Zum Installieren einer Windenergieanlage war es üblich, den Rotor mit den Rotorblättern am Aufstellungsort der Windenergieanlage am Boden vorzufertigen, nämlich die Rotorblätter an der Rotornabe zu befestigen. Der so vorgefertigte Rotor wurde dann insbesondere an der Rotornabe zusammen mit den montierten Rotorblättern vom Boden angehoben und an einer Gondel, die ohne den Rotor bereits auf einem Mast oder Turm montiert war, befestigt.

Mit zunehmender Größe der Windenergieanlagen und damit zunehmender Länge der Rotorblätter erweist sich eine solche Art der Montage als immer schwieriger. So weist beispielsweise der Rotor einer Enercon E126 Windenergieanlage einen Durchmesser von 126 m auf. Einen Rotor dieses Ausmaßes zu handhaben ist schwierig und stellt insbesondere hohe Anforderungen an den notwendigen Kran. Neben den geometrischen Ausmaßen weist ein solcher Rotor auch eine enorme Masse und damit ein enormes Gewicht auf. Es kommt hinzu, dass bei solchen modernen, großen Windenergieanlagen auch noch der Turm höher ist, insbesondere die installierte Achshöhe sehr hoch ist. So kann eine Windenergieanlage des Unternehmens Enercon vom Typ E 126 eine Achshöhe von über 130 m haben, was der dreifachen Höhe des Segelschulschiffs Gorch Fock entspricht.

Insbesondere die Höhe, in die ein zu montierendes Teil zu heben ist als auch dessen Last bestimmen ganz wesentlich den erforderlichen Kran und damit dessen Kosten. Eine zusätzliche Höhe von wenigen Metern kann mitunter dazu führen, dass ein Kran einer nächstgrößeren Klasse benötigt wird. Dabei gehören schon heute die für die Aufstellung von großen, modernen Windenergieanlagen wie der E 126 verwendeten Kräne zu den größten, verfügbaren Autokränen.

Wird ein Rotorblatt einzeln an eine bereits an der Gondel montierten Rotornabe installiert, braucht entsprechend nur das Gewicht dieses einen Rotorblattes gehoben zu werden. So kann beispielsweise ein Rotorblatt vertikal von unten an einer entsprechend ausgerichteten Rotornabe montiert werden. Bei einem dreiblättrigen Rotor befinden sich dann aber die beiden übrigen Positionen für die beiden übrigen Rotorblätter in einer hoch gelegenen Position. Zum Installieren der beiden Rotorblätter müsste somit das jeweilige Rotorblatt entsprechend hoch gehoben werden, nämlich höher als die Rotorachse, oder die Rotornabe müsste gedreht werden. Diese Drehung der Rotornabe mit einem installierten Rotorblatt benötigt aber eine entsprechend hohe Kraft, um das bereits installierte Rotorblatt in einer Drehung anzuheben. Grundsätzlich kann eine solche Drehung mittels des Generators im Motorbetrieb vorgenommen werden. Hierfür wäre aber eine entsprechende Installation des Generators in diesem frühen Aufbaustadium erforderlich, einschließlich einer Anbindung an das Stromnetz, in das später eingespeist werden soll, um Energie für diesen Motorbetrieb zu beziehen. Zusätzlich müssten die Generatoren entsprechend für diese spezielle Anforderung mit Energie versorgt und angesteuert werden.

Als allgemeiner Stand der Technik wird auf die Dokumente EP 2 003 333 A1, DE 10 2008 033 857 A1, DE 20 2010 003 033 U1, DE 201 09 835 U1 und DE 103 05 543 C5 verwiesen.

Aufgabe der vorliegenden Erfindung ist es somit, wenigstens eines der oben genannten Probleme zu adressieren, insbesondere ganz oder teilweise zu lösen. Insbesondere soll eine Lösung für eine verbesserte Montage eines Rotors und gegebenenfalls auch eine verbesserte Möglichkeit der Demontage oder des Tausches eines Rotorblattes vorgeschlagen werden. Zumindest soll eine alternative Lösung angegeben werden.

Erfindungsgemäß wird eine Hebetraverse gemäß Anspruch 1 vorgeschlagen. Eine solche Hebetraverse ist zum Heben und Handhaben eines Rotorblatts vorgesehen. Sie weist ein Kranbefestigungsmittel auf, mit dem die Hebetraverse an einem Kran befestigt, insbesondere angehängt werden kann. Weiterhin ist wenigstens ein Blattbefestigungsmittel vorgesehen, mit dem die Hebetraverse an dem Rotorblatt befestigt werden kann bzw. umgekehrt. Die Hebetraverse weist zudem ein Längsschwenkmittel auf, mithilfe dessen das von der Hebetraverse getragene Rotorblatt um eine Längsachse des Rotorblattes geschwenkt werden kann. Insbesondere ist die Hebetraverse mit diesem Längsschwenkmittel so ausgebildet, dass sie ein Rotorblatt beispielsweise waagerecht hält und dabei in dieser waagerechten Position um die waagerechte Rotorblattachse schwenkt bzw. dreht.

Außerdem ist ein Querschwenkmittel vorgesehen, um das von der Hebetraverse getragene Rotorblatt um eine Querachse zu schwenken, die quer zur Längsachse ausgebildet ist. Dabei kommt es nicht auf eine genaue 90°-Anordnung der Querachse zur Längsachse an, sondern darauf, dass das Rotorblatt mittels des Querschwenkmittels insbesondere so geschwenkt werden kann, dass sich die Längsachse verändert, insbesondere angehoben oder abgesenkt wird.

Das Längsschwenkmittel und das Querschwenkmittel sind somit dazu vorgesehen, zwei unterschiedliche Schwenkbewegungen des Rotorblattes auszuüben, die unterschiedliche Zwecke haben können, wie unten noch erläutert wird.

Das Längsschwenkmittel weist einen Aktuator zum aktiven Schwenken des Rotorblattes auf. Das Längsschwenkmittel kann somit beispielsweise durch einen Motor und/oder Hydraulikantrieb aktiv eine Kraft ausüben, insbesondere Arbeit aufbringen, um das Rotorblatt um die Längsachse zu schwenken. Gemäß einer Ausführungsform wird das Längsschwenkmittel zumindest durch einen solchen Aktuator gebildet und kann zusätzliche Elemente wie insbesondere Befestigungselemente aufweisen.

Das Querschwenkmittel ist zum passiven Schwenken ausgebildet und weist eine Bremse und zusätzlich oder alternativ ein Feststellmittel oder Festsetzmittel zum Feststellen oder Festsetzen der Hebetraverse in wenigstens zwei voneinander verschiedenen Schwenkpositionen auf. Das Querschwenkmittel verfügt insoweit nicht über einen Aktuator, der aktiv eine Kraft ausüben, insbesondere Arbeit verrichten kann, sondern nur über passive Mittel, die ein entsprechendes Schwenken ermöglichen und führen können. Demnach wird zum einen eine entsprechende Schwenkachse verwirklicht und zum anderen kann eine Bremse eine anderweitig bewirkte Schwenkbewegung bremsen oder anhalten. Wird eine gewünschte Endposition erreicht, wird zum Festsetzen ein entsprechendes Festsetzmittel vorgeschlagen, wie ein zum temporären Verbolzen vorbereitetes Feststellmittel. Demnach wird also eine Schwenkbewegung durch externe Kräfte, wie beispielsweise eine Gewichtskraft verursacht, von dem Querschwenkmittel dabei aber geführt, nämlich insbesondere hinsichtlich Bewegungsrichtung und hinsichtlich Bewegungsgeschwindigkeit, einschließlich der Möglichkeit, die Schwenkbewegung anzuhalten. Gemäß einer Ausgestaltung wird das Querschwenkmittel zumindest durch ein Schwenkgelenk gebildet, das eine entsprechende Schwenkachse schafft, und kann zusätzliche Elemente aufweisen, wie insbesondere beschriebene Elemente zum Bremsen der Schwenkbewegung oder zum Festsetzen einer geschwenkten Position.

Weiterhin ist die Hebetraverse durch einen oberen und einen unteren Tragrahmenabschnitt gekennzeichnet. Der obere Tragrahmenabschnitt ist mit dem Kran zu verbinden und der untere Tragrahmenabschnitt ist mit dem Rotorblatt zu verbinden. Das Querschwenkmittel ist dabei zum Ausführen einer Schwenkbewegung des unteren Tragrahmenabschnitts relativ zum oberen Tragrahmenabschnitt vorbereitet. Es werden somit zwei zueinander verschwenkbare Tragrahmenabschnitte vorgesehen. Eine Feststellscheibe ist vorgesehen, die zum Fixieren unterschiedlicher Schwenkpositionen des unteren Tragrahmenabschnitts relativ zum oberen Tragrahmenabschnitt vorbereitet ist. Beispielsweise kann hierzu eine Bremse wie eine Backenbremse an der Feststellscheibe angreifen und so das Bremsen oder Fixieren der Schwenkposition erreichen. Alternativ oder ergänzend kann die Feststellscheibe Bohrungen aufweisen, in die ein Bolzen oder Stift zum Fixieren einer Schwenkposition eingeführt werden kann.

Gemäß einer Ausgestaltung ist die Hebetraverse dadurch gekennzeichnet, dass drei Blattbefestigungsmittel vorgesehen sind und jeweils eine Tragschlaufe zum lösbaren Befestigen eines Rotorblatts aufweisen. Dabei ist jede Tragschlaufe insbesondere dazu vorgesehen, mit einem Bolzen, Stift oder ähnlichen Gegenstück am Rotorblatt zusammenzuwirken. So kann zu jeder Tragschlaufe ein solcher Bolzen oder Stift vorgesehen sein, der durch die Tragschlaufe durchgeführt wird, um die Tragschlaufe festzuhalten und dadurch eine Verbindung zwischen Hebetraverse und Rotorblatt herzustellen.

Vorzugsweise weist das Längsschwenkmittel einen linearen Aktuator auf, insbesondere einen Hydraulikzylinder zum Heben und Senken eines der Blattbefestigungsmittel. Insbesondere ist der lineare Aktuator zwischen der Tragschlaufe des entsprechenden einen Blattbefestigungsmittels und dem unteren Tragrahmenabschnitt angeordnet. Somit sind drei Befestigungsmittel an der Hebetraverse und damit bei der Benutzung drei Befestigungspunkte am Rotorblatt vorgesehen. Der lineare Aktuator wirkt dabei mit einem der drei Blattbefestigungsmittel zusammen und kann eine Tragschlaufe und damit einen Befestigungspunkt heben oder senken. Dadurch, dass die anderen beiden Befestigungspunkte - relativ zum unteren Tragrahmenabschnitt der Hebetraverse - dabei in ihrer Position unverändert bleiben, kann eine Schwenkbewegung des Rotorblattes durch diesen linearen Aktuator erreicht werden. Entsprechende Ansteuermittel können an der Hebetraverse angeordnet sein. Hierzu können Energiespeicher wie elektrische Energiespeicher bei Verwendung eines Elektromotors und/oder ein Druckspeicher bei Verwendung eines Hydraulikzylinders vorgesehen sein und die Ansteuerung kann beispielsweise funkferngesteuert von Servicepersonal am Boden oder im Kran betätigt werden.

Vorzugsweise wird vorgeschlagen, dass das Kranbefestigungsmittel wenigstens einen Aufhängeabschnitt, insbesondere einen Ring, eine Öse oder einen Schäkel zum Aufhängen der Hebetraverse an dem Kran aufweist. Hierdurch ist eine einfache Befestigung an dem Kran erreichbar und die beschriebenen Schwenkbewegungen können durch die entsprechend vorbereitete Hebetraverse vorgenommen werden, ohne dass eine Anpassung des Kranes hierfür unbedingt notwendig wäre.

Weiterhin wird eine Handhabungsanordnung zum Handhaben eines Rotorblattes einer Windenergieanlage vorgeschlagen. Teil dieser Handhabungsanordnung ist eine Hebetraverse sowie das daran temporär befestigte Rotorblatt sowie eine Lösevorrichtung zum Lösen der Verbindung zwischen dem Rotorblatt und der Hebetraverse. Die Verbindung zwischen Hebetraverse und Rotorblatt wird mittels wenigstens einem Bolzen, Stift oder ähnlichem Element erreicht. Die Verbindung erfolgt insbesondere so, dass die Hebetraverse wenigstens eine Schlaufe oder Öse aufweist, insbesondere mehrere Schlaufen oder Ösen, und der Bolzen durch jede Schlaufe oder Öse reicht, um hierdurch die Verbindung herzustellen. Weiterhin ist eine Lösevorrichtung zum Lösen der Verbindung zwischen dem Rotorblatt und der Hebetraverse vorgesehen. Diese Lösevorrichtung weist ein Zugmittel auf, mit dem der Bolzen bzw. Stift aus der Schlaufe herausgezogen werden kann, um dadurch die jeweilige Verbindung zu lösen. Diese Zugvorrichtung kann somit so ausgebildet sein, dass unmittelbar an der Verbindungsstelle keine Personen wie Servicemitarbeiter bzw. Mitarbeiter vom Aufbauteam sich aufhalten müssen, sondern vielmehr eine Betätigung aus der Ferne wie beispielsweise aus der Rotornabe heraus vorgenommen werden kann. Hierzu kann eine entsprechend lange Zugleine vorgesehen sein oder es wird eine andere Fernauslöse- oder Fernbedienung vorgesehen.

Vorzugsweise weist das Rotorblatt eine aerodynamische Blattoberfläche und einen darunter angeordneten Innenraum auf, wobei die Blattoberfläche wenigstens eine Öffnung zum Durchführen eines Blattbefestigungsmittels der Hebetraverse, wie eine Befestigungsschlaufe aufweist. Der Innenraum weist dabei einen Befestigungsabschnitt zum Befestigen des Blattbefestigungsmittels auf. Insbesondere kann dieser Befestigungsabschnitt den beschriebenen Bolzen oder Stift beinhalten und für diesen Stift eine axiale Führung vorsehen. Der Befestigungsabschnitt ist entsprechend so in der Nähe insbesondere unterhalb der Öffnungen der aerodynamischen Blattoberfläche angeordnet, dass die Schlaufen der Blattbefestigungsmittel durch diese Öffnungen unmittelbar zum jeweiligen Befestigungsabschnitt reichen können.

Weiterhin wird eine Transportvorrichtung zum Transportieren einer erfindungsgemäßen Hebetraverse vorgeschlagen. Die Transportvorrichtung weist einen Transportrahmen auf, der an die Hebetraverse angepasste Aufnahmeabschnitte aufweist. Insbesondere ist dabei wenigstens eine Tragrahmenaufnahme zum Aufnehmen des unteren Tragrahmenabschnitts vorgesehen und/oder es ist eine Aktuatoraufnahme zum Aufnehmen des Aktuators des Längsschwenkmittels vorgesehen. Hierdurch kann die Hebetraverse sicher zum Einsatzort, insbesondere Aufstellungsort einer Windenergieanlage transportiert werden.

Erfindungsgemäß wird zudem ein Verfahren zum Montieren von Rotorblättern gemäß Anspruch 7 vorgeschlagen. Demnach wird eine an der Gondel der Windenergieanlage bzw. der zu errichtenden Windenergieanlage bereits montierte Rotornabe in einer ersten Montageposition ausgerichtet. Hierbei ist die Rotornabe insbesondere so ausgerichtet, dass sie einen Befestigungsflansch zum Befestigen eines ersten Rotorblattes in einer Position querab hat, in der das erste Rotorblatt in waagerechter Ausrichtung daran befestigt werden kann. Mit anderen Worten ist dieser Befestigungsabschnitt zum Befestigen des ersten Rotorblattes in einer so genannten 3-Uhr- oder 9-Uhr-Position ausgerichtet.

Das erste Rotorblatt wird dann mittels eines Krans und einer Hebetraverse angehoben und zum Befestigen an der Rotornabe an dem in 3 Uhr bzw. 9 Uhr ausgerichteten Befestigungsabschnitt angeordnet und dann dort befestigt. Das Rotorblatt ist hierbei waagerecht ausgerichtet und korrespondiert somit zu dieser ersten Montageposition der Rotornabe.

Ist dieses erste Rotorblatt an der Rotornabe befestigt, nämlich insbesondere montiert, so wird dieses erste Rotorblatt mittels der an dem Kran befestigten Hebetraverse abgesenkt, so dass sich die Rotornabe in eine zweite Montageposition dreht. Diese zweite Montageposition ist dazu vorbereitet, ein zweites Rotorblatt ebenfalls in waagerechter Ausrichtung einer Rotornabe zu montieren. Entsprechend wird das erste Rotorblatt so abgesenkt, dass sich die Rotornabe, wenn sie für insgesamt drei Rotorblätter vorgesehen ist, um 60° dreht. In dieser neuen Position wird die Rotornabe dann festgesetzt, insbesondere verbolzt. Es werden also wenigstens einer, meist mehrere Bolzen so im Übergangsbereich zwischen Rotornabe und Gondel angeordnet, dass sich die Rotornabe nicht weiterdrehen kann. Hierzu kann eine entsprechende Vorrichtung vorgesehen sein, die die Rotornabe auch für andere Zwecke wie beispielsweise Wartungszwecke festsetzen kann.

Das Absenken des ersten montierten Rotorblattes erfolgt vorzugsweise dadurch, dass die Hebetraverse eine entsprechende Schwenkbewegung quer zur Rotorblattlängsachse ausführen kann. Die Hebetraverse braucht hierzu keine Bewegung aktiv auszuüben, weil sich das Rotorblatt durch sein Gewicht absenken kann. Die Hebetraverse ermöglicht aber die Schwenkbewegung und kann diese führen.

Hat die Rotornabe die zweite Montageposition eingenommen und ist in dieser fixiert, kann die Hebetraverse von dem ersten Rotorblatt gelöst werden und zum Aufnehmen des zweiten Rotorblatts eingesetzt werden. Zum Lösen der Hebetraverse wird diese zunächst so abgesenkt, dass das Gewicht des Rotorblattes nicht mehr an der Hebetraverse lastet, sondern nun im Grunde vollständig von der Rotornabe aufgenommen wird. Vorzugsweise wird dann eine Lösevorrichtung betätigt, die insbesondere Bolzen oder Stifte aus Tragschlaufen der Blattbefestigungsmittel der Hebetraverse herauszieht, um dadurch die Verbindung zwischen Hebetraverse und Rotorblatt zu lösen. Ein solches Lösen kann in vorteilhafter Weise erfolgen, ohne dass Personal in diesem Bereich des Rotorblattes sich aufhalten muss. Insbesondere wird dort kein Haltekorb für entsprechende Personen benötigt.

Vorzugsweise wird in weiteren Schritten das zweite Rotorblatt mittels des Krans und der Hebetraverse in einer im Wesentlichen waagerechten Ausrichtung angehoben und an dem entsprechend ausgerichteten Befestigungsabschnitt der Rotornabe angeordnet und befestigt. Das in 3-Uhr-Position montierte erste Rotorblatt wurde entsprechend auf eine 5-Uhr-Position abgesenkt, so dass nun das zweite Rotorblatt in 9-Uhr-Position montiert wird. Die Rotornabe ist noch in dieser Position festgesetzt und somit kann nach Befestigen des zweiten Rotorblattes die Hebetraverse von dem zweiten Rotorblatt gelöst und entfernt werden.

Vorzugsweise ist vorgesehen, die Rotornabe nach dem Lösen der Hebetraverse von dem ersten Rotorblatt um etwa 180° um eine vertikale Achse zu drehen. Hierdurch wird das Installieren des zweiten Rotorblattes vereinfacht, weil nun das zweite Rotorblatt etwa dort gehoben und montiert wird, wo auch das erste Rotorblatt gehoben und montiert wurde. Da die Rotornabe gegenüber dem Turm vorsteht, sind diese beiden Positionen nicht vollständig identisch, aber sehr ähnlich. Insbesondere kann das zweite Rotorblatt auf gleiche Art und Weise am Boden z.B. mit einem Transportfahrzeug bereitgestellt werden.

Vorzugsweise wird zum Montieren des dritten Rotorblattes vorgeschlagen, zunächst einen Ballastarm an der Rotornabe zu montieren, nämlich an dem noch freien dritten Befestigungsbereich, der für das dritte Rotorblatt vorgesehen ist. Dieser dritte Befestigungsbereich ist nach Montage des zweiten Rotorblattes zunächst in einer so genannten 1-Uhr-Position, also in einer Position, in der es nach oben weist und aus einer senkrecht nach oben weisenden Position nur um 30° verdreht ist. Um ein Rotorblatt, also das dritte Rotorblatt in dieser Position zu montieren, müsste es sehr weit hochgehoben werden. Dies kann einen sehr großen Kran erforderlich machen und entsprechend hohe Kosten verursachen, was vermieden werden soll. Ein Drehen der Rotornabe durch Absenken eines Rotorblattes, wie dies nach dem Montieren des ersten Rotorblattes erfolgte, ist nicht ohne Weiteres möglich, weil die beiden bis jetzt installierten Rotorblätter aufgrund ihrer Gewichtsverhältnisse zu einer Bewegung der Rotornabe in eine nicht gewünschte Richtung führen würden. Die Rotornabe würde aufgrund der Gewichtsverhältnisse zu einer Position streben, bei der der dritte Befestigungsbereich senkrecht nach oben weisen würde. Es wird somit nun gemäß einer Ausgestaltung vorgeschlagen, einen Ballastarm an dem dritten Befestigungsbereich in der 1-Uhr-Position zu montieren. Dieser Ballastarm weist einen Befestigungsflansch ähnlich eines Rotorblattes auf, ist ansonsten aber wesentlich kürzer als ein Rotorblatt und kann von seinem Befestigungsflansch aus eine abknickende oder gebogene Form aufweisen. Insbesondere ist der Ballastarm so ausgebildet, dass er mit möglichst wenig Kranhöhe installiert werden kann. Vorzugsweise ist dieser Ballastarm so ausgestaltet, dass er unmittelbar mit dem Kran ohne Verwendung einer Hebetraverse angehoben werden kann und gegebenenfalls eine Funktionalität oder einen Teil der Funktionalität einer Hebetraverse aufweist, indem er bspw. eine Dreh- bzw. Schwenkbewegung ermöglicht.

Ist der Ballastarm montiert, kann die Festsetzung der Rotornabe - was auch als Verbolzung bezeichnet wird - gelöst werden. Der Ballastarm kann dann vom Kran geführt in eine 3-Uhr-Position dieses dritten Befestigungsbereiches abgesenkt werden. In dieser dritten Montageposition wird dann die Rotornabe wieder festgesetzt - nämlich verbolzt - und der Ballastarm kann wieder entfernt werden. Schließlich wird das dritte Rotorblatt in waagerechter Ausrichtung montiert.

Vorzugsweise kann auch hier zuvor, nämlich nach der Montage des zweiten Rotorblattes und vor der Montage des Ballastarmes oder zumindest vor Montage des dritten Rotorblattes die Rotornabe um 180° um eine vertikale Achse gedreht, insbesondere zurückgedreht werden.

Weiterhin wird gemäß einer Ausgestaltung vorgeschlagen, dass die Hebetraverse das jeweils gehobene und zu montierende Rotorblatt um eine Längsachse, nämlich etwa um seine Rotorblattachse, einem Bereich um die Rotorblattachse so dreht, dass das Rotorblatt einen möglichst geringen Windwiderstand aufweist. Diese Bewegung kann die Hebetraverse vorzugsweise aktiv durch Betätigen eines Aktuators eines Längsschwenkmittels ausführen.

Vorzugsweise wird eine Hebetraverse gemäß wenigstens einer der oben beschriebenen Ausführungsformen verwendet und/oder es wird eine Handhabungsanordnung wie oben beschrieben verwendet.

Erfindungsgemäß wird zudem ein Verfahren zum Montieren einer Rotornabe vorgeschlagen. Insbesondere zum Montieren einer bestimmungsgemäß drei Rotorblätter aufweisenden Rotornabe. Demnach wird zunächst die Rotornabe an der Gondel montiert und anschließend sukzessive die Rotorblätter nacheinander an der Rotornabe montiert. Dieses Montieren erfolgt nach einem Verfahren zum Montieren von Rotorblättern, wie oben gemäß wenigstens einer der Ausführungsformen beschrieben.

Zudem wird ein Verfahren zum Demontieren von Rotorblättern vorgeschlagen, das im Grunde dem beschriebenen Verfahren zum Montieren von Rotorblättern sinngemäß in umgekehrter Reihenfolge entspricht. Demnach kann zunächst bei festgesetzter Rotornabe ein drittes Rotorblatt in waagerechter Position, also beispielsweise in 3-Uhr-Position entfernt werden. Dann wird dort ein Ballastarm montiert, der dabei weiterhin vom Kran gehalten wird, während die Festsetzung der Rotornabe gelöst wird. Der Ballastarm wird dann in eine 1-Uhr-Position mittels des Kranes hochgezogen, so dass das zweite Rotorblatt eine 9-Uhr-Position einnimmt. In dieser Position wird die Rotornabe festgesetzt, der Ballastarm entfernt und, das zweite Rotorblatt demontiert. Der Ballastarm wird dann in der 9-Uhr-Position montiert und die Rotornabe wird dann wieder gelöst und mittels des Ballastarms so gedreht, dass sich das verbleibende Rotorblatt in einer 3-Uhr-Position befindet. Die Rotornabe wird dann festgesetzt und das letzte Rotorblatt demontiert.

Weiterhin wird ein Verfahren zum Tauschen von Rotorblättern vorgeschlagen. Dieses Verfahren erfolgt so, dass Rotorblätter wie beschrieben entfernt werden und anschließend neue oder instand gesetzte Rotorblätter wie beschrieben montiert werden.

Die Erfindung wird nun nachfolgend anhand von Ausführungsbeispielen unter Bezugnahme auf die begleitenden Figuren beispielhaft im Detail erläutert.
- Fig. 1: zeigt eine Horizontalachsen-Windenergieanlage mit drei installierten Rotorblättern.
- Fig. 2: zeigt schematisch in einer perspektivischen Darstellung ein von einer Hebetraverse gehobenes Rotorblatt.
- Fig. 3: zeigt die Hebetraverse mit Rotorblatt der Fig. 2 mit dem Rotorblatt in einer um seine Rotorachse verdrehten Position.
- Fig. 4: zeigt eine auf einem Transportrahmen befestigte Hebetraverse in einer perspektivischen Darstellung.
- Fig. 5: zeigt einen Ausschnitt aus einem Innenraum eines Rotorblattes mit Befestigungsabschnitten in einer perspektivischen Darstellung.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

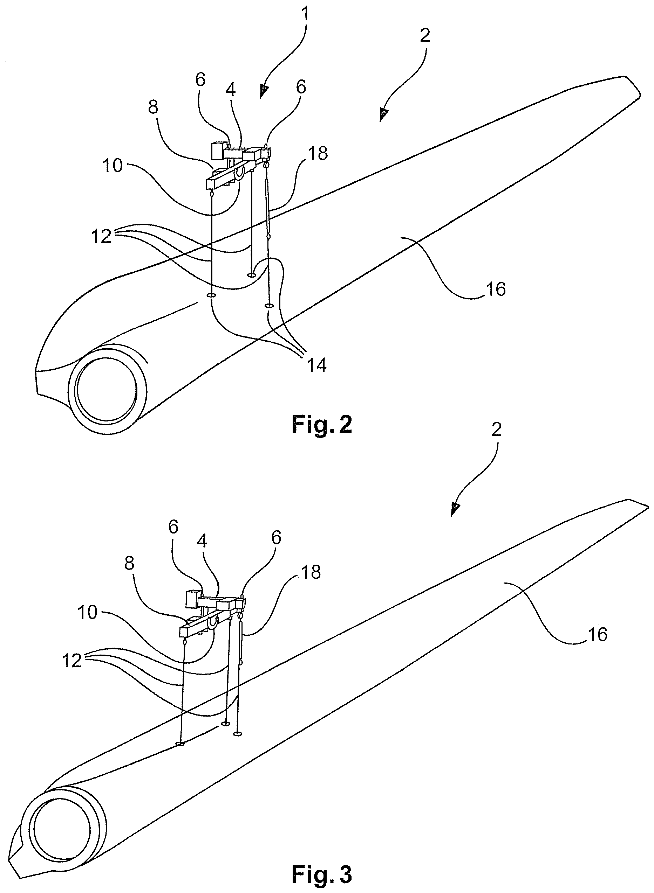

Fig. 2 zeigt eine Hebetraverse 1, an der ein Rotorblatt 2 angeordnet ist und durch die Hebetraverse 1 gehoben und gehalten wird. Die Darstellung ist perspektivisch und das Rotorblatt 2 befindet sich in einer im Wesentlichen waagerechten Ausrichtung, bezogen auf die Rotorblattlängsachse. Die Hebetraverse 1 weist einen oberen Tragrahmenabschnitt 4 auf, zum Befestigen an einem Kran auf. Gemäß der Darstellung der Fig. 2 und im Übrigen auch der Fig. 3 befindet sich die Hebetraverse an einem Kran befestigt, der der Einfachheit halber in den Figuren 2 und 3 aber nicht dargestellt ist. Zur Befestigung an dem Kran sind Befestigungsösen 6 vorgesehen, die auch als Anpickpunkte bezeichnet werden können.

Unterhalb des oberen Tragrahmenabschnitts 4 und etwa quer dazu ist ein unterer Tragrahmenabschnitt 8 vorgesehen. Der untere Tragrahmenabschnitt 8 kann gegenüber dem oberen Tragrahmenabschnitt 4 geschwenkt werden, nämlich um eine Achse, die im Wesentlichen quer zur Rotorblattlängsachse verläuft. Dadurch kann die Rotorblattlängsachse und damit entsprechend das Rotorblatt 2 gekippt werden. Zum Führen einer solchen Kipp- oder Schwenkbewegung ist eine Bremsvorrichtung 10 vorgesehen, die auch als Feststellvorrichtung bezeichnet werden kann.

Zum Befestigen der Hebetraverse 1 an dem Rotorblatt 2 sind drei Blattbefestigungsmittel 12 vorgesehen, die der Einfachheit halber mit demselben Bezugszeichen versehen sind die länglichen Seile mit Rundschlingen aufweisen. Diese länglichen Seile sind durch Öffnungen 14 in der Rotorblattoberfläche 16 geführt und weisen im Inneren des Rotorblatts 2 Rundschlingen zur Befestigung auf. Eines der Blattbefestigungsmittel 12 weist einen Hydraulikzylinder 18 als Aktuator auf, um das betreffende Blattbefestigungsmittel 12 aktiv in der Länge verändern zu können. Durch eine solche Längenänderung kann das Rotorblatt 2 um seine Rotorblattachse geschwenkt werden.

Fig. 3 zeigt eine solche um die Rotorblattlängsachse verschwenkte Position des Rotorblattes 2. In Fig. 3 ist der Hydraulikzylinder 18 gegenüber der Position der Fig. 2 zusammengezogen, wodurch sich das entsprechende Blattbefestigungsmittel 12 verkürzt hat, wodurch die verschwenkte bzw. gedrehte Position der Fig. 3 erreicht wurde.

Somit kann das Rotorblatt 2 mithilfe eines Montagekrans und der Hebetraverse 2 angehoben werden. Dabei sind die Rundschlingen der Blattbefestigungsmittel 12 mit dem Rotorblatt 2 durch Verriegelungsbolzen verbunden. Mithilfe des Hydraulikzylinders 18 wird das Rotorblatt 2 um die Blattachse gedreht, um möglichst eine geringe Windangriffsfläche zu bieten.

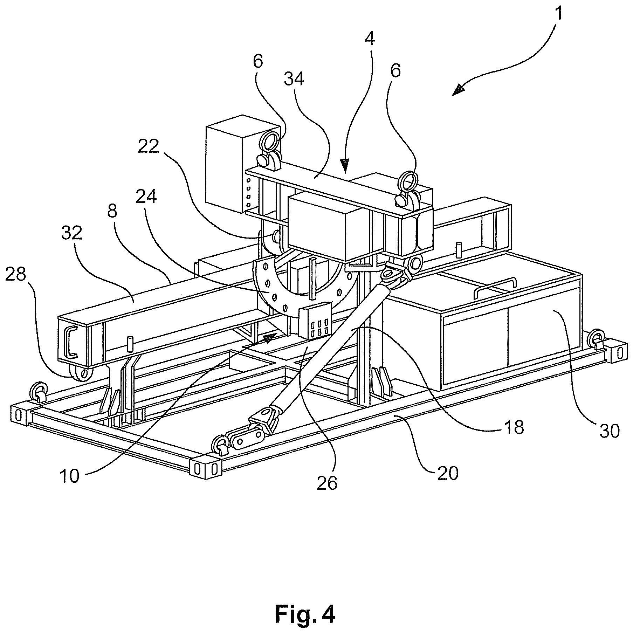

In Fig. 4 ist die Hebetraverse 1 transportfertig auf einem Transportrahmen 20 zum Transport auf einem Fahrzeug vorbereitet. In der Fig. 4 sind weitere Details zu erkennen wie die als Schäkel ausgebildeten Befestigungsösen 6 zum Befestigen der Hebetraverse 1 an einem Kran. Der untere Tragrahmenabschnitt 8 ist über ein Schwenkgelenk 22 relativ zu dem oberen Tragrahmenabschnitt 4 verschwenkbar. Zum Kontrollieren einer solchen Schwenkbewegung umfasst die Bremsvorrichtung 10 eine Bremsscheibe 24 und ein Bremsmittel 26, das an der Bremsscheibe 24 angreift und dadurch die Schwenkbewegung kontrollieren kann. Der untere Tragrahmenabschnitt 8 weist zwei Blattbefestigungsösen 28 auf, von denen eine zu erkennen ist und eine weitere hinter der Transportbox 30 angeordnet ist. Beide Blattbefestigungsösen 28 sind an einem Längsträger 32 angeordnet, der im Wesentlichen den unteren Tragrahmenabschnitt 8 bildet.

Das dritte Blattbefestigungsmittel 12 ist unmittelbar an dem oberen Tragrahmenabschnitt 4 befestigt, nämlich unmittelbar unterhalb des Querträgers 34, der einen wesentlichen Bestandteil des oberen Tragrahmenabschnitts 4 bildet. Dieses an dem Querträger 34 befestigte Blattbefestigungsmittel 12 weist den Hydraulikzylinder 18 auf, der hier in einer Transportposition angeordnet ist. Im Betrieb der Hebetraverse, wenn diese von dem Transportrahmen 20 entfernt wurde und eingesetzt wird, weisen die Blattbefestigungsmittel 12 zusätzlich Seile mit Rundschlingen auf. Diese Seile sind in den Figuren 2 und 3 dargestellt, können beim Transport auf dem Transportrahmen 20 aber separat transportiert werden und beispielsweise in der Transportbox 30 untergebracht werden.

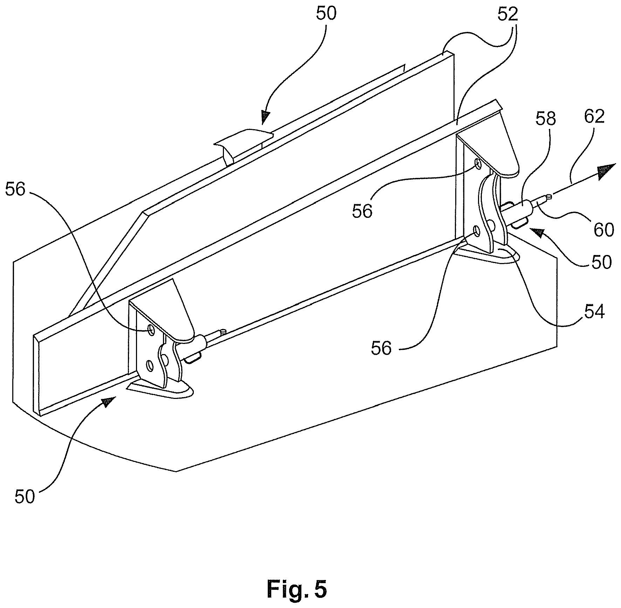

Aus der Fig. 5 sind drei Befestigungsabschnitte 50 erkennbar, die der Einfachheit halber mit gleichen Bezugszeichen bezeichnet werden, obwohl einige Unterschiede insbesondere in der Abmessung vorhanden sind. Die Befestigungsabschnitte 50 sind an inneren Strukturen wie Versteifungsrippen 52 befestigt. Die Befestigungsabschnitte umfassen jeweils zwei Haltewände 54, die jeweils zwei in einer Flucht angeordneten Bohrungen 56 aufweisen. Ein weiteres Paar Bohrungen 56 kann vorgesehen sein, um beispielsweise die Befestigungsposition zu ändern. Zwingend erforderlich ist ein solches weiteres Bohrungspaar jedes Befestigungsabschnitts 50 aber nicht.

Im Bereich der beiden Bohrungen 56 ist eine Bolzenvorrichtung 58 mit jeweils einem vorgespannten Bolzen 60 vorgesehen. An dem vorgespannten Bolzen 60 kann eine Zugvorrichtung wie ein Seil angeordnet werden, um den Bolzen zum Lösen einer Halteschlaufe in die Öffnungsrichtung 62 zu ziehen. Die Fig. 5 zeigt den geöffneten Zustand. In diesem Zustand kann eine Halteschlaufe zwischen zwei Bohrungen 56 und damit zwischen zwei Haltewände 54 angeordnet werden. Zum Befestigen wird dann der vorgespannte Bolzen 60 durch jeweils die entsprechenden beiden Bohrungen 56 geschoben, um dadurch die dort angeordnete Tragschlaufe aufzunehmen. Zum Lösen braucht nur der Bolzen 60 in die Öffnungsrichtung 62 gezogen werden und eine entsprechende Tragschlaufe würde wieder freigegeben werden.

Es wird somit eine Lösung vorgeschlagen, die Probleme begrenzter Hubkapazitäten insbesondere von Kränen adressiert und eine Möglichkeit schafft, die Rotorblätter nach erfolgter Montage der Rotornabe nachzurüsten bzw. danach zu installieren. Hierbei wird zudem vorgeschlagen, dass eine Verbindung vom Rotorblatt zur Hebetraverse automatisch bzw. halbautomatisch gelöst werden kann, ohne unmittelbaren Einsatz von Personal an der Aufnahmestelle.

Hierzu hängt die Hebetraverse am Kranhaken des Montagekrans. Die Hebetraverse wird mithilfe von Rundschlingen mit dem Rotorblatt verbunden und das Rotorblatt wird mithilfe der Hebetraverse angehoben. Hierbei können Führungsseile an der Hebetraverse befestigt werden. Nach Montage des Rotorblattes werden entsprechende Verriegelungsbolzen der Anpickpunkte gelöst, insbesondere über eine Fernauslösung. Die Hebetraverse wird dann weiter angehoben, so dass die Rundschlingen aus dem Rotorblatt gezogen werden. Die vorgeschlagene Lösung schafft zudem die Möglichkeit, mithilfe der Hebetraverse das Rotorblatt um einen bestimmen Winkel abzulassen oder anzuheben. Nach Ablassen des Rotorblattes wird der drehbar bzw. schwenkbar gelagerte Träger der Hebetraverse durch eine Bremsvorrichtung in seiner Position gehalten. Danach werden die Anpickpunkte entriegelt und die Traverse wird vom Rotorblatt gelöst.

Als Vorteile können durch die vorgeschlagene Lösung die Reduzierung der Stückgewichte für den Montagekran erreicht werden. Weiterhin lässt sich eine Montage der Windenergieanlage bei höheren Windgeschwindigkeiten als bei anderen Lösungen erreichen. Weiterhin kann der Einsatz von Krankörben vermieden werden und beim Heben der Rotorblätter kann deren Ausrichtung manipuliert werden, wobei gleichzeitig nur ein Kranhaken notwendig ist.

## Patentansprüche

1. Hebetraverse (1) zum Heben und Handhaben eines Rotorblatts (2) einer Windenergieanlage (100), umfassend:
- einen oberen, mit einem Kran zu verbindenden Tragrahmenabschnitt (4) und
- einen unteren, mit dem Rotorblatt (2) zu verbindenden Tragrahmenabschnitt (8)
- ein Kranbefestigungsmittel (6) zum Befestigen der Hebetraverse an dem Kran,
- wenigstens ein Blattbefestigungsmittel (12) zum Befestigen der Hebetraverse an dem Rotorblatt (2) und
- ein Längsschwenkmittel (18) zum Schwenken das von der Hebetraverse (1) getragenen Rotorblattes (2) um eine Längsachse des Rotorblattes (2) und
- ein Querschwenkmittel (10, 22) zum Schwenken des von der Hebetraverse (1) getragenen Rotorblattes (2) um eine quer zur Längsachse ausgebildete Querachse,
wobei das Längsschwenkmittel (18) einen Aktuator (18) zum aktiven Schwenken des Rotorblattes (2) aufweist, und
das Querschwenkmittel (10, 22) zum passiven Schwenken ausgebildet ist und ein Bremsmittel (10) und/oder ein Feststellmittel (10) aufweist zum Feststellen der Hebetraverse (1) in wenigstens zwei voneinander verschiedenen Schwenkpositionen,
wobei das Querschwenkmittel (10, 22) zum Ausführen einer Schwenkbewegung des unteren Tragrahmenabschnitts (8) relativ zum oberen Tragrahmenabschnitt (4) vorbereitet ist, eine entsprechende Schwenkachse aufweist und eine Feststellscheibe (10) zum Fixieren einer Schwenkposition des unteren Tragrahmenabschnitts (8) relativ zum oberen Tragrahmen-abschnitt (4) aufweist.

2. Hebetraverse (1) nach Anspruch 1, **dadurch gekennzeichnet, dass** drei Blattbefestigungsmittel (12) vorgesehen sind und jeweils eine Tragschlaufe zum lösbaren Befestigen an dem Rotorblatt (2) aufweisen und/oder dass das Längsschwenkmittel (18) einen linearen Aktuator (18), insbesondere Hydraulikzylinder (18) zum Heben und Senken eines der Blattbefestigungsmittel (12) oder eines Teils davon aufweist, wobei der lineare Aktuator (18) insbesondere zwischen einer bzw. der Tragschlaufe des entsprechenden Blattbefestigungsmittels (12) und einem bzw. dem unteren Tragrahmenabschnitt (8) angeordnet ist.

3. Hebetraverse (1) nach Anspruch 1 oder 2, **dadurch gekennzeichnet, dass** das Kranbefestigungsmittel (6) wenigstens einen Aufhängeabschnitt (6), insbesondere Ring (6), Öse (6) oder Schäkel, zum Aufhängen der Hebetraverse (1) an dem Kran aufweist.

4. Handhabungsanordnung zum Handhaben eines Rotorblattes (2) einer Windenergieanlage (100), umfassend
eine Hebetraverse (1) nach einem der vorstehenden Ansprüche zum Heben und Handhaben des Rotorblatts (2),
ein über eine Verbindung an der Hebetraverse (1) befestigtes Rotorblatt (2),
und eine Lösevorrichtung zum Lösen der Verbindung zwischen dem Rotorblatt (2) und der Hebetraverse (1), wobei
das Rotorblatt (2) mittels wenigstens einem Bolzen (58) an der Hebetraverse (1) verbunden ist, insbesondere so, dass die Hebetraverse (1) wenigstens eine Schlaufe oder Öse aufweist und der Bolzen (58) durch die Schlaufe oder Öse reicht, und wobei die Lösevorrichtung ein Zugmittel (60) zum Ziehen des Bolzens (58), insbesondere zum Ziehen des Bolzens (58) aus der jeweiligen Schlaufe oder Öse zum Lösen der Verbindung aufweist.

5. Handhabungsanordnung nach Anspruch 4, **dadurch gekennzeichnet, dass** das Rotorblatt (2) eine aerodynamische Blattoberfläche (16) und einen Innenraum aufweist, wobei die Blattoberfläche (16) wenigstens eine Öffnung (14) zum Durchführen eines Blattbefestigungsmittels (12) oder eines Teils davon der Hebetraverse (1) aufweist und der Innenraum mit wenigstens einem Befestigungsabschnitt (50) zum Befestigen des Blattbefestigungsmittels (12) der Hebetraverse (1) versehen ist.

6. Transportvorrichtung zum Transportieren einer Hebetraverse (1) gemäß einem der Ansprüche 1 bis 3, wobei die Transportvorrichtung einen Transportrahmen (20) mit an die Hebetraverse (1) angepassten Aufnahmeabschnitten aufweist, insbesondere eine Tragrahmenaufnahme zum Aufnehmen eines bzw. des unteren Tragrahmenabschnitts (8) und/oder eine Aktuatoraufnahme zum Aufnehmen eines bzw. des Aktuators des Längsschwenkmittels.

7. Verfahren zum Montieren von Rotorblättern (2) einer Windenergieanlage (100), die einen, eine Rotornabe und mehrere, insbesondere drei Rotorblätter (2) umfassenden Horizontalachsenrotor aufweisen, umfassend die Schritte:
- Ausrichten einer bereits montierten Rotornabe in einer ersten Montageposition,
- Heben eines ersten Rotorblattes (2) mittels eines Krans und einer Hebetraverse (1) gemäß einem der Ansprüche 1 bis 3
- Anordnen und Befestigen des ersten Rotorblattes (2) in einer im Wesentlichen waagerechten Ausrichtung an der in der ersten Montageposition ausgerichteten Rotornabe,
- Absenken des montierten, ersten Rotorblattes (2) mittels der Hebetraverse (1) so, dass sich die Rotornabe in eine zweite Montageposition dreht, in der ein zweites Rotorblatt (2) in waagerechter Ausrichtung an der Rotorblattnabe montiert werden kann und
- Festsetzen der Rotornabe in der zweiten Montageposition und Lösen der Hebetraverse (1) von dem ersten Rotorblatt (2).

8. Verfahren nach Anspruch 7 **gekennzeichnet durch** die weiteren Schritte
- Heben des zweiten Rotorblattes (2) mittels des Krans und der Hebetraverse (1),
- Anordnen und Befestigen des zweiten Rotorblattes (2) in einer im Wesentlichen waagerechten Ausrichtung an der in der zweiten Montageposition ausgerichteten Rotornabe und
- Lösen der Hebetraverse (1) von dem zweiten Rotorblatt (2).

9. Verfahren nach Anspruch 7 oder 8 wobei die Rotornabe nach dem Lösen der Hebetraverse (1) von dem ersten Rotorblatt (2) um etwa 180° um eine vertikale Achse gedreht wird.

10. Verfahren nach einem der Ansprüche 7 bis 9 **gekennzeichnet durch** die weiteren Schritte
- Montieren eines Balastarmes an der Rotornabe an einem für ein drittes Rotorblatt (2) vorgesehenen Befestigungsort, insbesondere Flansch,
- Absenken des Balastarmes so dass sich die Rotornabe in eine dritte Montageposition dreht, in der das dritte Rotorblatt (2) in waagerechter Ausrichtung an der Rotorblattnabe montiert werden kann,
- Festsetzen der Rotornabe in der dritten Montageposition,
- Entfernen des Balastarmes und
- Montieren des dritten Rotorblattes (2).

11. Verfahren nach einem der Ansprüche 7 bis 10, wobei das jeweils von der Hebetraverse (1) gehobene Rotorblatt (2) mittels der Hebetraverse (1) um eine Rotorblattlängsachse gedreht wird, um bei der Montage einen möglichst geringen Windwiderstand aufzuweisen.

12. Verfahren nach einem der Ansprüche 7 bis 11 wobei eine Handhabungsanordnung nach einem der Ansprüche 4 oder 5 verwendet wird.

13. Verfahren zum Montieren eines, eine Rotornabe und mehrere, insbesondere drei Rotorblätter (2) aufweisenden Horizontalachsenrotors an einer Gondel (104) einer Windenergieanlage (100) bzw. einer zu errichtenden Windenergieanlage (100) umfassend die Schritte
- Montieren der Rotornabe an der Gondel (104) und
- sukzessives Montieren der Rotorblätter (2) an der montierten Rotornabe, wobei ein Verfahren nach einem der Ansprüche 7 bis 12 verwendet wird.

14. Verfahren zum Demontieren von Rotorblättern (2) einer Windenergieanlage (100), die einen, eine Rotornabe und mehrere, insbesondere drei Rotorblätter (2) umfassenden Horizontalachsenrotor aufweist, wobei das Demontieren dem Ablauf des Montierens der Rotorblätter (2) gemäß einem der Ansprüche 7 bis 12 sinngemäß in umgekehrter Reihenfolge entspricht.

15. Verfahren zum Tauschen von Rotorblättern (2) einer Windenergieanlage (100), die einen, eine Rotornabe und mehrere, insbesondere drei Rotorblätter (2) umfassenden Horizontalachsenrotor aufweist, wobei Rotorblätter (2) gemäß einem Verfahren nach einem der Ansprüche 7 bis 12 montiert werden, und vorher bereits montierte und zu tauschende Rotorblätter (2) zuvor mit einem Verfahren nach Anspruch 14 demontiert werden.

## Claims

1. A lifting beam (1) for lifting and handling a rotor blade (2) of a wind power installation (100), including:
- an upper carrier frame portion (4) to be connected to a crane and
- a lower carrier frame portion (8) to be connected to the rotor blade (2)
- a crane fixing means (6) for fixing the lifting beam to the crane,
- at least one blade fixing means (12) for fixing the lifting beam to the rotor blade (2), and
- a longitudinal pivoting means (18) for pivoting the rotor blade (2) carried by the lifting beam (1) about a longitudinal axis of the rotor blade (2), and/or
- a transverse pivoting means (10, 22) for pivoting the rotor blade (2) carried by the lifting beam (1) about a transverse axis which is transverse relative to the longitudinal axis,
wherein the longitudinal pivoting means (18) has an actuator (18) for actively pivoting the rotor blade (2), and
the transverse pivoting means (10, 22) is adapted for passive pivoting and has a brake means (10) and/or a securing means (10) for securing the lifting beam (1) in at least two mutually different pivotal positions,
wherein the transverse pivoting means (10, 22) is adapted to perform a pivotal movement of the lower carrier frame portion (8) relative to the upper carrier frame portion (4), having a corresponding pivot axis and a securing disc (10) for fixing a pivotal position of the lower carrier frame portion (8) relative to the upper carrier frame portion (4).

2. A lifting beam (1) according to claim 1 **characterised in that** there are provided three blade fixing means (12) and each have a respective carrier loop for releasable fixing to the rotor blade (2) and/or the longitudinal pivoting means (18) has a linear actuator (18), in particular a hydraulic cylinder (18), for raising and lowering one of the blade fixing means (12) or a part thereof, wherein the linear actuator (18) is arranged in particular between a or the carrier loop of the corresponding blade fixing means (12) and a or the lower carrier frame portion (8).

3. A lifting beam (1) according to claim 1 or claim 2 **characterised in that** the crane fixing means (6) has at least one suspension portion (6), in particular a ring (6), eye (6) or shackle, for suspending the lifting beam (1) from the crane.

4. A handling arrangement for handling a rotor blade (2) of a wind power installation (100), including
a lifting beam (1) according to one of the preceding claims for lifting and handling the rotor blade (2),
a rotor blade (2) fixed by way of a connection to the lifting beam (1), and
a release device for releasing the connection between the rotor blade (2) and the lifting beam (1), wherein
the rotor blade (2) is connected by means of at least one bolt (58) to the lifting beam (1), in particular in such a way that the lifting beam (1) has at least one loop or eye and the bolt (58) passes through the loop or eye, and wherein the release device has a pull means (60) for pulling the bolt (58), in particular for pulling the bolt (58) out of the respective loop or eye for releasing the connection.

5. A handling arrangement according to claim 4 **characterised in that** the rotor blade (2) has an aerodynamic blade surface (16) and an internal space, wherein the blade surface (16) has at least one opening (14) for passing therethrough a blade fixing means (12) or a part thereof of the lifting beam (1) and the internal space is provided with at least one fixing portion (50) for fixing the blade fixing means (12) of the lifting beam (1).

6. A transport apparatus for transporting a lifting beam (1) according to one of claims 1 to 3 wherein the transport apparatus has a transport frame (20) with receiving portions adapted to the lifting beam (1), in particular a carrier frame receiving means for receiving a or the lower carrier frame portion (8) and/or an actuator receiving means for receiving a or the actuator of the longitudinal pivoting means.

7. A method of fitting rotor blades (2) of a wind power installation (100) which has a horizontal-axis rotor including a rotor hub and a plurality of and in particular three rotor blades (2), comprising the steps:
- orienting an already fitted rotor hub in a first fitting position,
- lifting a first rotor blade (2) by means of crane and a lifting beam (1) according to one of claims 1 to 3,
- arranging and fixing the first rotor blade (2) in a substantially horizontal orientation to the rotor hub oriented in the first fitting position,
- lowering the fitted first rotor blade (2) by means of the lifting beam (1) in such a way that the rotor hub rotates into a second fitting position in which a second rotor blade (2) can be fitted in a horizontal orientation to the rotor blade hub, and
- locking the rotor hub in the second fitting position and releasing the lifting beam (1) from the first rotor blade (2).

8. A method according to claim 7 **characterised by** the further steps:
- lifting the second rotor blade (2) by means of the crane and the lifting beam (1),
- arranging and fixing the second rotor blade (2) in a substantially horizontal orientation to the rotor blade oriented in the second fitting position, and
- releasing the lifting beam (1) from the second rotor blade (2).

9. A method according to claim 7 or claim 8 wherein the rotor hub is rotated about a vertical axis through about 180° after release of the lifting beam (1) from the first rotor blade (2).

10. A method according to one of claims 7 to 9 **characterised by** the following steps:
- fitting a ballast arm to the rotor hub at a fixing location provided for a third rotor blade (2), in particular a flange,
- lowering the ballast arm so that the rotor hub rotates into a third fitting position in which the third rotor blade (2) can be fitted to the rotor blade hub in a horizontal orientation,
- locking the rotor hub in the third fitting position,
- removing the ballast arm, and
- fitting the third rotor blade (2).

11. A method according to one of claims 7 to 10 wherein the respective rotor blade (2) lifted by the lifting beam (1) is rotated about a rotor blade longitudinal axis by means of the lifting beam (1) in order to present the lowest possible wind resistance in the fitting operation.

12. A method according to one of claims 7 to 11 wherein a handling arrangement according to one of claims 4 or 5 is used.

13. A method of fitting a horizontal-axis rotor having a rotor hub and a plurality of and in particular three rotor blades (2) to a pod (104) of a wind power installation (100) or of a wind power installation (100) to be erected, including the steps:
- fitting the rotor hub to the pod (104), and
- successively fitting the rotor blades (2) to the fitted rotor hub, wherein a method according to one of claims 7 to 12 is used.

14. A method of removing rotor blades (2) of a wind power installation (100) which has a horizontal-axis rotor including a rotor hub and a plurality of and in particular three rotor blades (2), wherein the removal operation corresponds to the procedure of fitting the rotor blades (2) according to one of claims 7 to 12 appropriately in the reverse sequence.

15. A method of replacing rotor blades (2) of a wind power installation (100) which has a horizontal-axis rotor including a rotor hub and a plurality of and in particular three rotor blades (2), wherein rotor blades (2) are fitted in accordance with a method according to one of claims 7 to 12 and/or previously already fitted rotor blades (2) to be replaced are first removed with a method according to claim 14.

## Revendications

1. Traverse de levage (1) pour le levage et la manipulation d'une pale de rotor (2) d'une éolienne (100), comprenant :
- une section de cadre porteur (4) supérieure à raccorder à une grue (4) et
- une section de cadre porteur (8) inférieure à raccorder à la pale de rotor (2)
- un moyen de fixation de grue (6) pour la fixation de la traverse de levage à la grue,
- au moins un moyen de fixation de pale (12) pour la fixation de la traverse de levage à la pale de rotor (2) et
- un moyen de pivotement longitudinal (18) pour le pivotement de la pale de rotor (2) portée par la traverse de levage (1) autour d'un axe longitudinal de la pale de rotor (2) et
- un moyen de pivotement transversal (10, 22) pour le pivotement de la pale de rotor (2) portée par la traverse de levage (1) autour d'un axe transversal réalisé transversalement à l'axe longitudinal,
dans laquelle le moyen de pivotement longitudinal (18) présente un actionneur (18) pour le pivotement actif de la pale de rotor (2), et
le moyen de pivotement transversal (10, 22) est réalisé pour le pivotement passif et présente un moyen de freinage (10) et/ou un moyen de blocage (10) pour le blocage de la traverse de levage (1) dans au moins deux positions de pivotement différentes l'une de l'autre,
dans laquelle le moyen de pivotement transversal (10, 22) est préparé pour la réalisation d'un mouvement pivotant de la section de cadre porteur (8) inférieure par rapport à la section de cadre porteur supérieure (4), présente un axe de pivotement correspondant et présente un disque de blocage (10) pour la fixation d'une position de pivotement de la section de cadre porteur (8) inférieure par rapport à la section de cadre porteur (4) supérieure.

2. Traverse de levage (1) selon la revendication 1, **caractérisée en ce que** trois moyens de fixation de pale (12) sont prévus et présentent respectivement une boucle porteuse pour la fixation amovible sur la pale de rotor (2) et/ou que le moyen de pivotement longitudinal (18) présente un actionneur linéaire (18), en particulier un vérin hydraulique (18) pour le levage et la descente d'un des moyens de fixation de pale (12) ou d'une partie de celui-ci, dans laquelle l'actionneur linéaire (18) est agencé en particulier entre une ou la boucle porteuse du moyen de fixation de pale (12) correspondant et une ou la section de cadre porteur (8) inférieure.

3. Traverse de levage (1) selon la revendication 1 ou 2, **caractérisée en ce que** le moyen de fixation de grue (6) présente au moins une section d'accrochage (6), en particulier un anneau (6), un oeillet (6) ou une manille, pour l'accrochage de la traverse de levage (1) à la grue.

4. Agencement de manipulation pour la manipulation d'une pale de rotor (2) d'une éolienne (100), comprenant
une traverse de levage (1) selon l'une quelconque des revendications précédentes pour le levage et la manipulation de la pale de rotor (2),
une pale de rotor (2) fixée par le biais d'une liaison à la traverse de levage (1),
et un dispositif de détachement pour le détachement de la liaison entre la pale de rotor (2) et la traverse de levage (1), dans lequel
la pale de rotor (2) est raccordée au moyen d'au moins un boulon (58) sur la traverse de levage (1), en particulier de sorte que la traverse de levage (1) présente au moins une boucle ou un oeillet et le boulon (58) traverse la boucle ou l'oeillet, et dans lequel le dispositif de détachement présente un moyen de traction (60) pour la traction du boulon (58), en particulier pour la traction du boulon (58) hors de la boucle ou de l'oeillet respectif pour le détachement de la liaison.

5. Agencement de manipulation selon la revendication 4, **caractérisée en ce que** la pale de rotor (2) présente une surface de pale (16) aérodynamique et un espace intérieur, dans lequel la surface de pale (16) présente au moins une ouverture (14) pour la réalisation d'un moyen de fixation de pale (12) ou d'une partie de celui-ci de la traverse de levage (1) et l'espace intérieur est pourvu d'au moins une section de fixation (50) pour la fixation du moyen de fixation de pale (12) de la traverse de levage (1).

6. Dispositif de transport pour le transport d'une traverse de levage (1) selon l'une quelconque des revendications 1 à 3, dans lequel le dispositif de transport présente un cadre de transport (20) avec des sections de réception adaptées à la traverse de levage (1), en particulier un logement de cadre porteur pour la réception d'une ou de la section de cadre porteur (8) inférieure et/ou un logement d'actionneur pour la réception d'un ou de l'actionneur du moyen de pivotement longitudinal.

7. Procédé de montage de pales de rotor (2) d'une éolienne (100), qui présentent un rotor d'axe horizontal comprenant un moyeu de rotor et plusieurs, en particulier trois, pales de rotor (2), comprenant les étapes :
- l'orientation d'un moyeu de rotor déjà monté dans une première position de montage,
- le levage d'une première pale de rotor (2) au moyen d'une grue et d'une traverse de levage (1) selon l'une quelconque des revendications 1 à 3,
- l'agencement et la fixation de la première pale de rotor (2) dans une orientation sensiblement horizontale sur le moyeu de rotor orienté dans la première position de montage,
- l'abaissement de la première pale de rotor montée (2) au moyen de la traverse de levage (1) de sorte que le moyeu de rotor se tourne dans une seconde position de montage dans laquelle une seconde pale de rotor (2) peut être montée en orientation horizontale sur le moyeu de pale de rotor et
- la fixation du moyeu de rotor dans la seconde position de montage et le détachement de la traverse de levage (1) de la première pale de rotor (2).

8. Procédé selon la revendication 7, **caractérisé par** les autres étapes :
- le levage de la seconde pale de rotor (2) au moyen de la grue et de la traverse de levage (1),
- l'agencement et la fixation de la seconde pale de rotor (2) dans une orientation sensiblement horizontale sur le moyeu de rotor orienté dans la seconde position de montage et
- le détachement de la traverse de levage (1) de la seconde pale de rotor (2).

9. Procédé selon la revendication 7 ou 8, dans lequel le moyeu de rotor est tourné après le détachement de la traverse de levage (1) de la première pale de rotor (2) d'environ 180° autour d'un axe vertical.

10. Procédé selon l'une quelconque des revendications 7 à 9, **caractérisé par** les autres étapes
- le montage d'un bras de ballast sur le moyeu de rotor sur un lieu de fixation prévu pour une troisième pale de rotor (2), en particulier une bride,
- l'abaissement du bras de ballast de sorte que le moyeu de rotor se tourne dans une troisième position de montage dans laquelle la troisième pale de rotor (2) peut être montée en orientation horizontale sur le moyeu de pale de rotor,
- la fixation du moyeu de rotor dans la troisième position de montage,
- le retrait du bras de ballast et
- le montage de la troisième pale de rotor (2).

11. Procédé selon l'une quelconque des revendications 7 à 10, dans lequel la pale de rotor (2) levée respectivement par la traverse de levage (1) est tournée au moyen de la traverse de levage (1) autour d'un axe longitudinal de pale de rotor afin de présenter lors du montage une résistance au vent la plus faible possible.

12. Procédé selon l'une quelconque des revendications 7 à 11, dans lequel un agencement de manipulation selon l'une quelconque des revendications 4 ou 5 est utilisé.

13. Procédé de montage d'un rotor d'axe horizontal présentant un moyeu de rotor et plusieurs, en particulier trois, pales de rotor (2) sur une nacelle (104) d'une éolienne (100) ou d'une éolienne (100) à ériger comprenant les étapes
- le montage du moyeu de rotor sur la nacelle (104) et
- le montage successif des pales de rotor (2) sur le moyeu de rotor monté, dans lequel un procédé selon l'une quelconque des revendications 7 à 12 est utilisé.

14. Procédé de démontage de pales de rotor (2) d'une éolienne (100), qui présente un rotor d'axe horizontal comprenant un moyeu de rotor et plusieurs, en particulier trois, pales de rotor (2), dans lequel le démontage correspond au déroulement du montage des pales de rotor (2) selon l'une quelconque des revendications 7 à 12 de manière analogue dans l'ordre inverse.

15. Procédé d'échange de pales de rotor (2) d'une éolienne (100) qui présente un rotor d'axe horizontal comprenant un moyeu de rotor et plusieurs, en particulier trois, pales de rotor (2), dans lequel des pales de rotor (2) sont montées selon un procédé selon l'une quelconque des revendications 7 à 12, et des pales de rotor (2) déjà montées au préalable et à échanger sont démontées au préalable avec un procédé selon la revendication 14.
